# DEMANDE DE BREVET EUROPEEN

(11) **EP 2 549 251 A1**
(43) Date de publication de la demande: **23.01.2013**
(21) Numéro de dépôt: 11305950.5
(22) Date de dépôt: 21.07.2011
(51) Int. Cl.: G01K 1/16, G01K 17/08, F24D 19/10

(54) **REPARTITEUR DE COUT DE CHAUFFAGE**

(71) Demandeur: Itron France, 92130 Issy-Les-Moulineaux (FR)
(72) Inventeur: Denis Guillot, Jérôme, 01310 BUELLAS (FR)
(74) Mandataire: Howson, Richard G.B.

(57) **Abrégé**

L'invention concerne un répartiteur de coût de chauffage destiné à être fixé sur un élément chauffant et comportant dans un boîtier (1), dit premier élément de carter, monté sur un adaptateur arrière (2), dit second élément de carter, un premier capteur de température (3) destiné à la mesure de la température externe de la pièce et disposé contre ou à proximité de la face intérieure du boîtier (1) et un second capteur de température (4) destiné à la mesure de la température de l'élément chauffant et disposé contre ou à proximité de la face intérieure de l'adaptateur (2).

Selon l'invention, au moins l'un desdits éléments de carter (1, 2) comporte une ouverture fermée par un insert (5) de conductivité thermique supérieure à celle du matériau dudit élément de carter (1, 2), contre la face intérieure duquel ou à proximité de la face intérieure duquel est disposé le capteur correspondant (3 , 4).

## Description

L'invention concerne un répartiteur de coût de chauffage.

Elle concerne plus précisément un répartiteur de coût de chauffage destiné à être fixé sur un élément chauffant, par exemple un radiateur, et comportant dans un boîtier monté sur un adaptateur arrière une carte électronique connectée à un premier capteur de température destiné à la mesure de la température externe de la pièce et à un second capteur de température destiné à la mesure de la température de l'élément chauffant.

Ce premier capteur de température destiné à la mesure de la température externe de la pièce est classiquement disposé contre ou à proximité de la face intérieure du boîtier et éventuellement un élément conducteur thermique est disposé entre le capteur et cette face, afin d'assurer une mesure correcte de la température de la pièce.

De même, le second capteur de température destiné à la mesure de la température externe de l'élément chauffant est classiquement disposé contre ou à proximité de la face intérieure de l'adaptateur et éventuellement un élément conducteur thermique est disposé entre le capteur et cette face, afin d'assurer une mesure correcte de température de l'élément chauffant.

Le boîtier et l'adaptateur sont en matière plastique, par exemple en ABS (acrylonitrile butadiène styrène), en PC (polycarbonate) ou en un alliage de ces deux matériaux.

Il est essentiel de déterminer la différence précise entre ces deux températures afin d'assurer la fiabilité du répartiteur de coût de chauffage et il est donc essentiel de mesurer avec un maximum de précision la température de la pièce et la température de l'élément chauffant.

L'objet de l'invention est d'améliorer ces mesures de température au moyen d'un agencement relativement simple.

Pour ce faire l'invention propose un répartiteur de coût de chauffage destiné à être fixé sur un élément chauffant et comportant dans un boîtier, dit premier élément de carter, monté sur un adaptateur arrière, dit second élément de carter, un premier capteur de température destiné à la mesure de la température externe de la pièce et disposé contre ou à proximité de la face intérieure du boîtier et un second capteur de température destiné à la mesure de la température de l'élément chauffant et disposé contre ou à proximité de la face intérieure de l'adaptateur, caractérisé en ce qu'au moins l'un desdits éléments de carter comporte une ouverture fermée par un insert de conductivité thermique supérieure à celle du matériau dudit élément de carter, contre la face intérieure duquel ou à proximité de la face intérieure duquel est disposé le capteur correspondant.

L'avantage de l'invention est double.

Elle permet d'améliorer les mesures de température dans un répartiteur de coût de chauffage.

Elle peut permettre également de fabriquer l'ensemble du boîtier ou de l'adaptateur en un matériau isolant thermique, par exemple moins cher, et d'assurer malgré tout une mesure fiable, grâce à cet insert.

Selon un mode de réalisation préféré, ledit boîtier comporte une ouverture fermée par un insert de conductivité thermique supérieure à celle du matériau dudit boîtier, contre la face intérieure duquel ou à proximité de la face intérieure duquel est disposé le premier capteur de température destiné à la mesure de la température externe de la pièce.

De préférence, c'est le boîtier qui comporte cette ouverture fermée par un insert. En effet, l'adaptateur est quant à lui disposé directement ou indirectement contre l'élément chauffant, en particulier le radiateur, et de ce fait pose en pratique peu de problème de précision de mesure de la température de l'élément chauffant. Ceci étant, l'invention peut être appliquée également à l'adaptateur, par exemple si le matériau le constituant est isolant thermique ou de conduction thermique faible.

De préférence, ledit insert est en métal.

Ledit insert peut être également en matière plastique.

Ledit insert peut être clipsé ou surmoulé dans ladite ouverture. Ledit insert peut être bouterollé sur ladite ouverture.

Le répartiteur comportant une carte électronique sur laquelle est monté ledit capteur, ledit insert est avantageusement en butée en sandwich entre ledit élément de carter et la carte électronique.

L'invention est décrite ci-après plus en détail à l'aide de figures ne représentant que des modes de réalisation préférés de l'invention.
La figure 1 est une vue en coupe longitudinale d'un répartiteur de coût de chauffage selon un premier mode de réalisation de l'invention.
Les figures 2A et 2B sont des vues de détail d'un répartiteur de coût de chauffage selon ce premier mode de réalisation de l'invention.
La figure 3 est une vue en coupe longitudinale d'un répartiteur de coût de chauffage selon un deuxième mode de réalisation de l'invention.
La figure 4 est une vue en coupe longitudinale d'un répartiteur de coût de chauffage selon un troisième mode de réalisation de l'invention.
Les figures 5A à 5C sont des vues de détail d'un répartiteur de coût de chauffage selon un quatrième mode de réalisation de l'invention.

Comme représenté sur les figures, un répartiteur de coût de chauffage destiné à être fixé sur un élément chauffant comporte dans un boîtier 1, dit premier élément de carter, monté sur un adaptateur arrière 2, dit second élément de carter, un premier capteur de température 3 destiné à la mesure de la température externe de la pièce et disposé contre ou à proximité de la face intérieure du boîtier 1 et un second capteur de température 4 destiné à la mesure de la température de l'élément chauffant et disposé contre ou à proximité de la face intérieure de l'adaptateur 2. Ces capteurs 3, 4 sont connectés à une carte électronique 6 ici disposée longitudinalement.

Selon l'invention, au moins l'un desdits éléments de carter 1, 2 comporte une ouverture fermée par un insert de conductivité thermique supérieure à celle du matériau de cet élément de carter, contre la face intérieure duquel ou à proximité de la face intérieure duquel est disposé le capteur correspondant.

De préférence, comme illustré sur les figures, c'est le boîtier 1 qui comporte une ouverture fermée par un insert 5 de conductivité thermique supérieure à celle du matériau du boîtier 1, contre la face intérieure duquel ou à proximité de la face intérieure duquel est disposé le premier capteur de température 3 destiné à la mesure de la température externe de la pièce. Cet insert 5 est donc en contact avec l'air ambiant de la pièce.

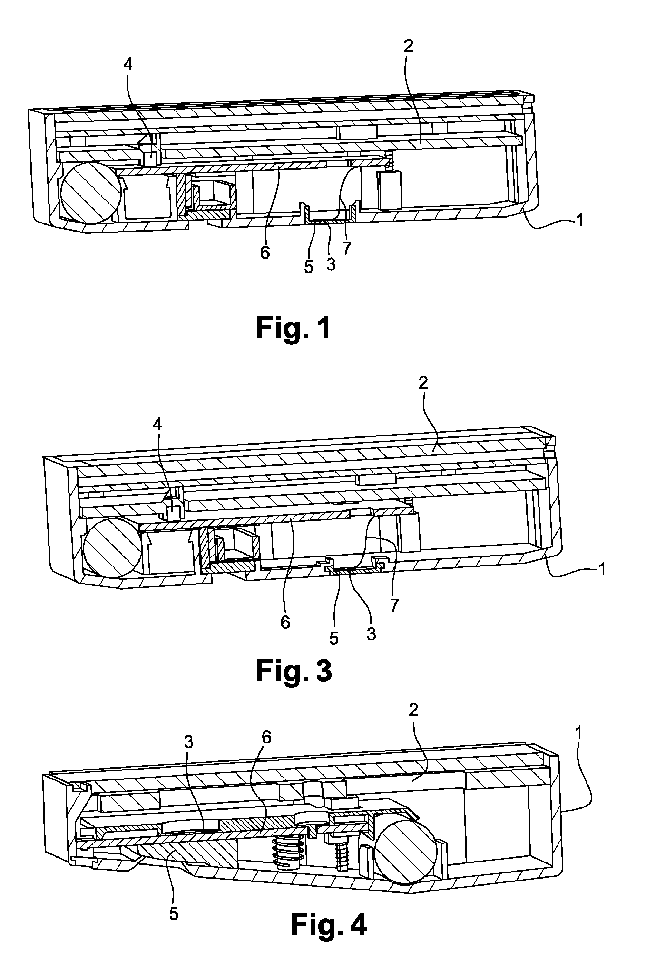

Selon les figures 1 et 3, le premier capteur 3 est connecté indirectement à la carte électronique 6 au moyen d'une connexion électrique 7.

Selon un premier mode de réalisation, l'insert 5 est clipsé dans l'ouverture du boîtier 1 comme représenté sur la figure 1.

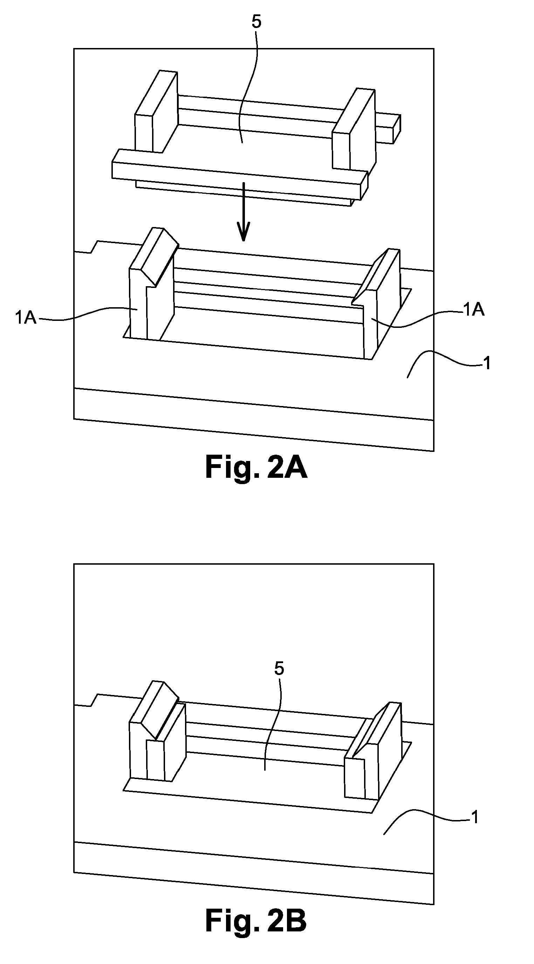

Les figures 2A et 2B illustrent un exemple de réalisation d'un tel clipsage. Deux branches 1A sont conformées sur la face interne du boîtier 1 en bordure de l'ouverture et l'insert 5 est conformé pour être clipsé sur des formes en harpon des extrémités de ces branches, pour fermer l'ouverture comme visible sur la figure 2B.

Selon un deuxième mode de réalisation, l'insert 5 est surmoulé dans l'ouverture du boîtier 1 comme représenté sur la figure 3.

Selon un troisième mode de réalisation représenté sur la figure 4, le premier capteur 3 est connecté directement à la carte électronique 6, monté sur une face de celle-ci et connecté thermiquement à l'autre face de celle-ci. L'insert 5 est en butée en sandwich entre la face intérieure du boîtier 1 et la carte électronique, pour fermer l'ouverture du boîtier et être en contact avec le capteur ou sa connexion thermique montée sur la carte électronique 6. L'insert 5 peut être en élastomère conducteur thermique.

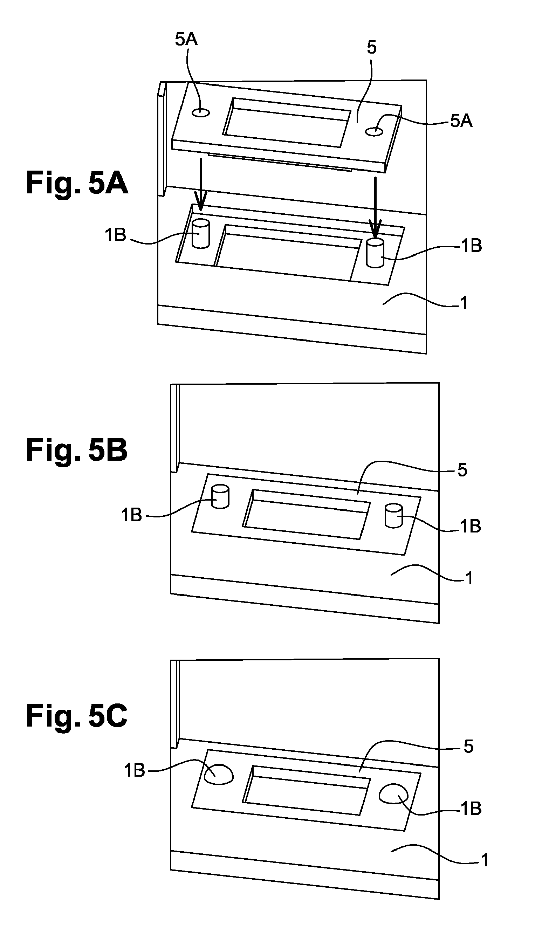

Selon un quatrième mode de réalisation représenté sur les figures 5A à 5C, l'insert est bouterollé sur l'ouverture du boîtier 1. Dans ce cas, des picots 1B sont conformées sur la face interne du boîtier 1 en bordure de l'ouverture et l'insert 5 comporte deux orifices 5A correspondants qui sont emboîtés dans les picots 1B, comme visible sur la figure 5B, ces derniers étant ensuite bouterollés c'est-à-dire déformés par fusion à la façon de rivets pour solidariser l'insert 5 et le boîtier 1 et, pour fermer l'ouverture comme visible sur la figure 5C.

Dans les modes de réalisation précédents, l'insert peut être en matière plastique ou en métal de conductivité thermique supérieure à celle du matériau du boîtier 1. De préférence, il est en métal, par exemple en acier ou en aluminium.

L'insert peut également être en matière plastique, de préférence en polymère chargé de fibres, avantageusement de fibres de carbone ou de verre. Le polycarbonate chargé de 30% de fibres de carbone, le sulfure de polyphénylène chargé de 20% de fibres de carbone, le sulfure de polyphénylène chargé de 40% de fibres de verre et/ou le polycarbonate chargé de 30% de fibres de verre peuvent par exemple être utilisés.

Bien que ci-dessus, l'ouverture est réalisée dans le boîtier et l'insert 5 est monté dans cette ouverture, l'invention englobe également les mêmes agencements disposés sur l'adaptateur arrière 2. Dans ce cas, l'adaptateur 2 comporte une ouverture fermée par un insert de conductivité thermique supérieure à celle du matériau de l'adaptateur 2, contre la face intérieure duquel ou à proximité de la face intérieure duquel est disposé le capteur de température 4 destiné à la mesure de la température de l'élément chauffant.

## Revendications

1. Répartiteur de coût de chauffage destiné à être fixé sur un élément chauffant et comportant dans un boîtier (1), dit premier élément de carter, monté sur un adaptateur arrière (2), dit second élément de carter, un premier capteur de température (3) destiné à la mesure de la température externe de la pièce et disposé contre ou à proximité de la face intérieure du boîtier (1) et un second capteur de température (4) destiné à la mesure de la température de l'élément chauffant et disposé contre ou à proximité de la face intérieure de l'adaptateur (2), **caractérisé en ce qu'**au moins l'un desdits éléments de carter (1, 2) comporte une ouverture fermée par un insert (5) de conductivité thermique supérieure à celle du matériau dudit élément de carter (1, 2), contre la face intérieure duquel ou à proximité de la face intérieure duquel est disposé le capteur correspondant (3 , 4).

2. Répartiteur selon la revendication 1, **caractérisé en ce que** ledit boîtier (1) comporte une ouverture fermée par un insert (5) de conductivité thermique supérieure à celle du matériau dudit boîtier (1), contre la face intérieure duquel ou à proximité de la face intérieure duquel est disposé le premier capteur de température (3) destiné à la mesure de la température externe de la pièce.

3. Répartiteur selon la revendication 1 ou 2, **caractérisé en ce que** ledit insert (5) est en métal.

4. Répartiteur selon l'une des revendications précédentes, **caractérisé en ce que** ledit insert (5) est clipsé ou surmoulé dans ladite ouverture.

5. Répartiteur selon l'une des revendications 1 à 3, **caractérisé en ce que** ledit insert (5) est bouterollé sur ladite ouverture.

6. Répartiteur selon l'une des revendications précédentes, comportant une carte électronique (6) sur laquelle est monté ledit capteur, **caractérisé en ce que** ledit insert (5) est en butée en sandwich entre ledit élément de carter (1, 2) et la carte électronique (6).
